# EUROPÄISCHE PATENTANMELDUNG

(11) **EP 1 158 255 A2**
(43) Veröffentlichungstag der Anmeldung: **28.11.2001**
(21) Anmeldenummer: 01250182.1
(22) Anmeldetag: 23.05.2001
(51) Int. Cl.: F24H 8/00, F24H 9/14

(54) **Heizkessel**

(30) Priorität: 25.05.2000 DE 10025729; 25.05.2000 DE 20009261 U
(71) Anmelder: Ryll Heizungs GmbH, 19348 Perleberg/Düpow (DE)
(72) Erfinder: Ryll, Siegfried, 19322 Wittenberge (DE)
(74) Vertreter: Erich, Dieter

(57) **Zusammenfassung**

Die Erfindung betrifft einen Heizkessel mit einer im oberen Teil eingeordneten Brennkammer und einem Brenner, dessen heiße Abgase die Kesselheizflächen im Fallstrom überstreichend mit einem Wärmetauscher in Berührung gebracht sind, wobei der Erfindung die Aufgabe zugrunde liegt, einen Heizkessel der gattungsgemäßen Art zu schaffen, der es ermöglicht, hohe Durchsatzwerte zu erreichen und eine unkomplizierte Separation sowie ein Einsetzen des Wärmetauschers und des Kondensatsammlers gestattet.

Die Erfindung löst die Aufgabe durch einen Heizkessel (1) mit einem im oberen Teil des Kessels im Brennerraum (2) eingeordneten Brenner, dessen heiße Abgase die Primärheizflächen des Kessels (1) in einem Fallstrom überstreichen und einem Rohrwärmetauscher, der mit dem Heizkessel (1) in einem separat ausgebildeten Modul angeordnet, verbunden ist.

Als Hauptzeichnung ist die Figur 2 ausgewählt worden.

## Beschreibung

Die Erfindung betrifft einen Heizkessel mit einer im oberen Teil eingeordneten Brennkammer und einem Brenner, dessen heiße Abgase die Kesselheizflächen im Fallstrom überstreichend mit einem Wärmetauscher in Berührung gebracht sind.

Es ist bekannt, in Heizkesseln Wärmetauscher zu verwenden, bei denen die Verbrennungs- oder Abgase den Wärmetauscher überstreichen, die Wärme dabei ableiten und die in den Tauscherrohren erwärmte Verbrennungsluft den Brennern zuführen. Es ist weiter bekannt, die Wärmetauscher fest in den Kesseln zu installieren oder sie als separates Aggregat außerhalb des Heizkessels anzuordnen und mittels Rohre funktional mit dem Kessel zu verbinden. Die DE 40 37 987 A1 offenbart einen Heizkessel mit einem Röhrenwärmetauscher zum Anwärmen der Verbrennungsluft, bei dem die Rohre des Wärmetauschers wechselseitig durch gerade Rohrabschnitte und diese verbindende Krümmer von einer Seite zur gegen-überliegenden Seite des Wärmetauschers geführt werden. Dabei werden die Rohre in Lagen verlegt und das Rohrende mündet in einem Sammelkasten, in dem das Kondensat separat angesammelt, behandelt und abgeführt wird. Die Kanäle des Wärmetauschers haben einen rechteckigen Querschnitt und weisen Durchgangsräume für das Durchfließen der heißen Abgase für die Erwärmung der Verbrennungsluft auf. Dabei offenbart die Schrift, dass die Rohre zum Transport der zu erwärmenden Verbrennungsluft aus einem Kunststoff gebildet sind, der gegen Wärme und Aggression der Abgase resistent ist. Zur besseren Handhabbarkeit und Erleichterung der Montage des Wärmetauschers sind die Rohre und Krümmer miteinander durch einfache Steckverbindungen zusammengeführt. Die Schrift gibt weiter an, dass durch die besondere Konstruktion des Vorwärmers mit dem Wärmetauscher und seiner dem Heizkessel beigeordneten Lage, die von den Abgasen erwärmte Luft für Heizzwecke, insbesondere für Raumheizzwecke, Verwendung finden kann.
Die DE 40 37 986 A1 stellt einen Röhrenwärmetauscher vor, bei dem Rohre von Verbrennungsgasen durchströmt sind. Unter Verbrennungsgase im Sinne der hier vorgeführten technischen Lösung werden Abgase aus der Kesselfunktion verstanden. Die Röhren des Wärmetauschers sind dabei von der zu erwärmenden Verbrennungsluft umschlossen. Sie geben ihre Wärme an die Verbrennungsluft ab. Durch die Abkühlung entsteht ein Kondensat, das sich in den Rohren niederschlägt und durch staudammähnliche Vorsprünge gehalten wird. Es ist ein Nachteil dieser erfindungsgemäßen Lösung, dass das Kondensat mit seinen aggressiven Substanzen in den Rohren zurückgestaut wird und ätzend auf die Innenwände der Rohre einwirken kann. Die Schrift stellt weiter dar, dass die Rohre und die Krümmer der Steckverbindung in der Art einer Muffenverbindung zusammengehalten werden.

Der Erfindung liegt die Aufgabe zugrunde, einen Heizkessel, mit einem im oberen Brennerraum angeordneten Brenner, dessen heiße Abgase die Primärheizflächen des Kessels im Fallstrom überstreichen, und mit einem Rohrwärmetauscher in Verbindung gebracht sind, zu schaffen, der es ermöglicht, hohe Durchsatzwerte zu erreichen und eine unkomplizierte Separation sowie ein Einsetzen des Wärmetauschers sowie des Kondensatsammlers gestattet.

Erfindungsgemäß wird die Aufgabe durch einen Heizkessel, mit einem im oberen Teil des Brennerraumes angeordneten Brenner, dessen heiße Abgase die Primärheizflächen des Kessels in einem Fallstrom übersteichen, der einen Rohrwärmetauscher aufweist, der mit dem Heizkessel in einem separat ausgebildeten Modul angeordnet, verbunden ist, gelöst.
Entsprechend einer sinnvollen Ausbildung der Erfindung ist das Modul mit dem aus dem Heizkessel geführten Abgas über ein in seiner Deckplatte eingeführtes Eintrittsrohr lösbar verbunden und bewegbar. In dem Modul sind Rohrbündel eines Wärmetauschers vorgesehen, die von den heißen Abgasen die Wärme übernehmen. Der Wärmetauscher befindet sich über einen Fangboden eingeordnet, der anfallendes Kondensat über einen Durchlauf in seiner tiefsten Stelle in einen Kondensatsammler führt. Der Sammler ist mit Stoffen zum Entgiften des Kondensats angefüllt, für dessen Austritt ein Abfluss im Modul über ein weiterführendes Rohr vorgesehen ist. Die Erfindung ausbildend, sind der Wärmetauscher, der darunter gelegene Fangboden für das Kondensat sowie der damit ausgebildete Kondensatsammler im Modul eingeordnet, mit Eingangs- und Ausgangsleitungen für die heißen Abgase, mit Zu- und Ableitungen der vorgewärmten Brennerraumluft sowie der Kondensatableitung über gleitende Steckverbindungen für eine Bewegung des kompletten Moduls zum Ein- und Ausbau ausgerüstet, ausgebildet.

Das Modul ist derart gestaltet, dass es ein funktionales Einordnen und auswechselndes Bewegen in dem Heizkessel ermöglicht. Es besteht dazu aus miteinander verbundenen Deck-, Boden- und Seitenflächen, in die Aufnahmeeinrichtungen für Rohrdurchgänge und Reinigungsöffnungen eingearbeitet sind. Das Modul weist eine Bodenfläche auf, die als Aufstandfläche mit dem Heizkessel in eine Wirkverbindung gebracht ist.
In vorteilhafter Ausbildung der Erfindung ist an der tiefsten Stelle des geneigten Fangbodens ein Durchlass angeordnet, der das Kondensat in einen Kondensatsammler ableitet, der, unter dem Fangboden angeordnet, mit Trennflächen bestückt ist, die als Überlaufbleche und von oben gegen den Boden geneigte Leitbleche ausgeformt sind. Die von oben gegen den Boden ragenden Leitbleche sind im Bereich des Bodens mit einem Durchlaufspalt versehen. Das Kondensat kann damit in einem intermittierend geführten Durchlauf durch die Kammern des Kondensatsammlers gelenkt werden. Nach einer weiteren erfindungsgemäß vorteilhaften Ausbildung sind in den als Stirn- und Rückflächen ausgebildeten Seiten des Moduls Durchtrittsöffnungen für einzusetzende Rohrverbindungen sowie Versorgungs- und Reinigungsöffnungen vorgesehen. Das Modul ist an den Seitenflächen geschlossen, so dass vorteilhafterweise ein glattes Einschieben des vollständig bestückten Moduls in den Heizkessel durchführbar ist. Eine vorteilhafte Ausgestaltung erhält die Erfindung dadurch, dass die Ausgangsöffnung für die Abgase des in den Heizkesseln eingesetzten Moduls mit einer annähernd horizontal verlaufenden, nach unten gegen den Heizkessel geneigten Rohrsektion verbunden ist, die sich in einer vertikalen Rohrsektion angelenkt fortsetzt, in der ein Sauggebläse angeordnet ist. Die Erfindung ausbildend, ist die Rohrsektion über dem Fangboden, in das Modul einmündend, angeordnet. Nach einer vorteilhaften Gestaltung der erfindungsgemäßen Lösung ist das Modul in den Heizkessel gleitend bewegbar einzuordnen.
Die erfindungsgemäße Lösung weist den Vorteil auf, dass der Heizkessel mit einem separat bewegbaren Modul ausgestattet ist. In dem Modul sind die wesentlichen Elemente des Wärmetauschers und dessen periphere Funktionsteile eingeordnet und damit eine einfache Montage und unkomplizierte Vorfertigung des Heizkessels gestattet. Die Bedienungs- und Wartungsmöglichkeiten sind bedeutend einfacher als bei den herkömmlichen Heizkesseln, weil den Vorteilen der erfindungsgemäßen Lösung folgend, die Wartungs- und Reparaturarbeiten für sich separat und nebeneinander laufend vorgenommen werden können. So ist es dem Wesen der Erfindung folgend möglich, das Modul unabhängig vom Standort des Heizkessels zu warten oder zu reparieren und gegen das bereits im Kessel befindliche auszutauschen.

Die Erfindung soll anhand eines Ausführungsbeispieles näher erläutert werden. In der zugehörigen Zeichnung zeigen:
- Fig. 1:: Den Heizkessel in einer schematischen Darstellung;
- Fig. 2:: Den Wärmetauscher, eingeordnet in ein Modul, im Schnitt.

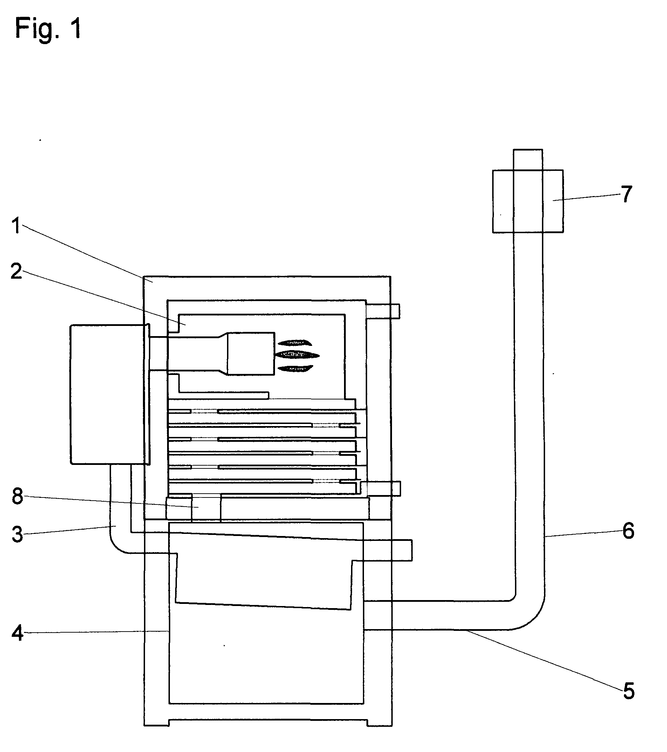

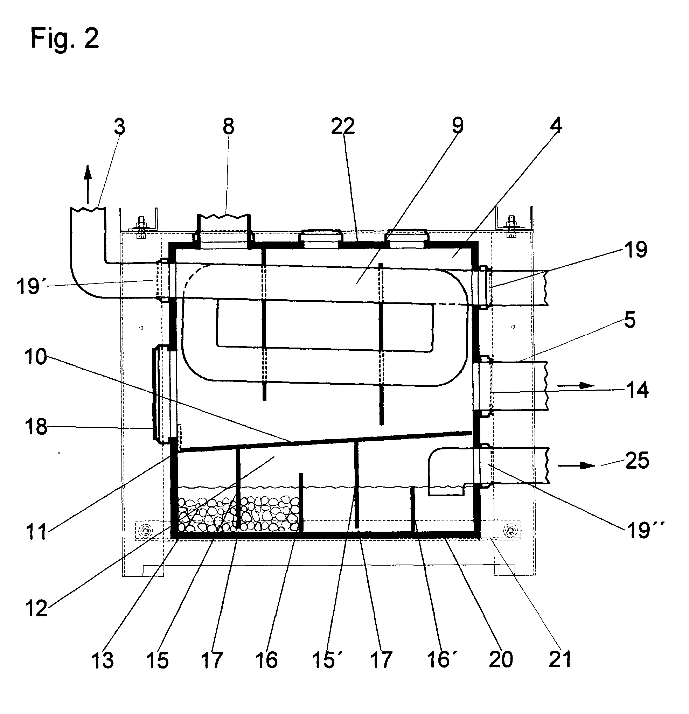

Gemäß Fig. 1 ist der Heizkessel 1 in seiner funktionellen Gesamtkonzeption über eine zum Kessel 1 hin geneigte Rohrsektion 5 und eine vertikal angelenkte Rohrsektion 6 mit dem Schornsteinkopf verbunden. Unterhalb des Schomsteinkopfes ist ein Sauggebläse 7 in der Rohrsektion 6 angeordnet, das die Abgase aus dem unteren Bereich des Heizkessels 1 absaugt und den für seine Funktion notwendigen Fallstrom im Kessel erzeugt. Die Rohrsektion 5 mit ihrer nach unten zum Heizkessel 1 gestellten Neigung gestattet ein sicheres Zurückführen des in den Rohrsektionen 5;6 gebildeten Kondensats. Ein Luftzugang 3 der erwärmten Verbrennungsluft, der aus dem im unteren Bereich angeordneten Modul 4 in den Brennerraum 2 führt, ist durch eine entsprechende Zuleitung gesichert. Die aus dem Brennerraum 2 über die Heizflächen im Fallstrom nach unten gelangende Luft wird über eine Eingangsleitung 8 in das Modul 4 eingeführt und überstreicht die Rohrbündel 9 des im Modul 4 eingeordneten Rohrwärmetauschers, so wie es in Fig. 2 vorgesehen ist. Das Modul 4 besteht aus einem in sich geschlossenen Behälter, in dem die wesentlichen Funktionsteile für die Luftvorwärmung und Kondensatsammlung sowie dessen Behandlung und Abführung eingeordnet sind. Das Modul 4 kann durch Lösen der Steckverbindungen, insbesondere für den Luftzugang 3, für die Rohrsektion 5, für den Abgasauslass 14 sowie den Kondensatauslass 23 einschließlich der Eingangsleitung 8 für das zuzuführende heiße Abgas unkompliziert und kompakt aus dem Heizkessel 1 entnommen werden. Die Verbindungen der funktionalen Rohranschlüsse 3;8;14;23 werden durch einfach zu lösende und wieder zu verbindende Steckverbinder 19;19';19" vorgenommen, so dass eine einfache Handhabung bei der Funktionsherstellung des einzusetzenden sowie zum Rückbau beim herauszunehmenden Modul 4 möglich ist. Das in sich geschlossen gestaltete und vollständig ausgerüstete Modul 4 trägt in seinem oberen Bereich die Rohrbündel 9 des Wärmetauschers. Im unteren Bereich des Moduls 4, von seiner Rückwand bis zur Vorderseite, über die gesamte Breite reichend, ist ein geneigter Fangboden 10 eingearbeitet, der im Bereich der Vorderseite einen Durchlass 11 aufweist, durch den das sich auf dem Fangboden 10 niederschlagende Kondensat der Rohrbündel 9 des Wärmetauschers sowie des Rückflusses aus den Rohrsektionen 5;6 in das Modul 4 gelangende Kondensat in einen Kondensatsammler 12 gelangt. Der Kondensatsammler 12 ist zwischen der Unterseite des Fangbodens 10 und der Bodenfläche 20 des Moduls 4 ausgebildet. Er besteht aus mehreren parallelverlaufenden Kammern, die mit Granulaten 13 gefüllt sind, und durch Überlaufbleche 16;16' und zwischen ihnen angeordneten Leitblechen 15;15' ihre funktionale Form und Lage erhalten. Die Leitbleche 15;15' ragen vom Fangboden 10 abwärts gerichtet gegen die Bodenfläche 20 des Moduls 4 und ermöglichen einen Durchfluss des Kondensats an der tiefsten Stelle des Kondensatsumpfes durch eingearbeitete Durchläufe 17. Das Kondensat wird jetzt im Sumpf des Kondensatsammlers 12 von einer ersten Kammer zu einer zweiten geführt, mit einem Überlauf über das Überlaufblech 16 in eine dritte Kammer geleitet und gelangt durch den zweiten Durchlauf 17 in eine vierte, deren Überlaufblech 16' bis in die Höhe der Verbindung 19" für den Abfluss des Kondensates reicht. Wie bereits betont, sind alle Verbindungen 19;19';19" der funktionalen Rohrverbindungen mit lösbaren Steckverbindungen ausgerüstet. Eine ebenso leicht zu handhabende Verbindung erhält eine Reinigungsöffnung 18, die in der Stirnseite des Moduls 4 eingearbeitet ist. Das Modul 4 steht mit seiner Bodenfläche 20 auf einer Aufstandfläche 21 des Heizkessels 1 auf, die fachgerecht als Gleitebene und Führung ausgebildet ist. Sind alle Funktionsverbindungen auf einfache Art gelöst, kann das Modul 4 aus dem Heizkessel 1 entnommen werden. Ebenso unkompliziert erfolgt der Einschub des möglichen Austauschmoduls und dessen Verbindung mit den funktionalen Verbindungsteilen und Rohren. Es ist auch möglich, durch die Reinigungs-öffnung 18 in das Modul 4 einzusehen, um seinen Zustand zu kontrollieren.

### Aufstellung der verwendeten Bezugszeichen

- 1: Heizkessel
- 2: Brennerraum
- 3: Luftzugang
- 4: Modul
- 5;6: Rohrsektion
- 7: Sauggebläse
- 8: Eingangsleitung
- 9: Rohrbündel
- 10: Fangboden
- 11: Durchlass
- 12: Kondensatsammler
- 13: Granulat
- 14: Abgasauslass
- 15,15': Leitblech
- 16,16': Überlaufblech
- 17: Durchlauf
- 18: Reinigungsöffnung
- 19;19';19": Verbindung
- 20: Bodenfläche
- 21: Aufstandfläche
- 22: Deckplatte
- 23: Kondensatauslass
- 24: Ableitung
- 25: Abfluss

## Patentansprüche

1. Heizkessel (1) mit einem, im oberen Teil des Kessels im Brennerraum (2) eingeordneten Brenner, dessen heiße Abgase die Primärheizflächen des Kessel (1) in einem Fallstrom überstreichen und einem Rohrwärmetauscher, der mit dem Heizkessel (1) in einem separat ausgebildeten Modul (4) angeordnet, verbunden ist.

2. Heizkessel nach Anspruch 1, **dadurch gekennzeichnet, dass** das Modul (4) aus dem Heizkessel (1) mit einem in seiner Deckplatte (22) eingefügten Eintrittsrohr (8) lösbar verbunden, bewegbar ist, und in seinem Innenraum Rohrbündel (9) eines Wärmetauschers vorgesehen, die von heißen Abgasen Wärme übernehmend, über einem Fangboden (10) eingeordnet sind, der das Kondensat über einen Durchlauf an seiner tiefsten Stelle in einen Kondensatsammler (12) führt, der mit Stoffen zum Entgiften des Kondensats angefüllt, und für dessen Austritt ein Abfluss (25) im Modul (4) als ein weiterführendes Rohr vorgesehen ist.

3. Heizkessel nach den Ansprüchen 1 und 2, **dadurch gekennzeichnet, dass** der Wärmetauscher und der Fangboden (10) für das Kondensat sowie der darunter gebildete Kondensatssammler (12) in dem Modul (4) eingeordnet sind und mit der Eingangs- und Ausgangsleitung (8;5) für die heißen Abgase sowie der Zuleitung (3) und Ableitung (24) der vorgewärmten Brennerraumluft sowie Kondensatableitungen (25) über gleitende Steckverbindungen (19;19';19") verfügen, welche für eine Bewegung des kompletten Moduls (4) zum Ein- und Ausbau leicht lösbar ausgebildet sind.

4. Modul für einen Heizkessel aus miteinander verbundenen Deck-, Boden- und Seitenflächen, in die Aufnahmeeinrichtungen für Rohrdurchgänge und Reinigungsöffnungen (18) eingearbeitet und mit dem im Modul (4) eingeordneten Wärmetauscher sowie dem Kondensatsammler (12) verbunden sind, einen Boden (20) aufweist, der als Aufstandfläche (21) mit einem Heizkessel (1) in eine Wirkverbindung gebracht ist.

5. Modul nach Anspruch 4, **dadurch gekennzeichnet, dass** der Fangboden (10) in Richtung eines Durchlasses (11) für das Kondensat geneigt ausgebildet ist.

6. Modul nach den Ansprüchen 4 und 5, **dadurch gekennzeichnet, dass** der Kondensatsammler (12) mit Trennflächen bestückt ist, die mit Überlaufblechen (16;16') und mit von oben gegen den Boden (20) gerichteten Leitblechen (15;15') mit einem unteren Durchlauf (17), Kammern bildend, das Kondensat mit einem intermittierenden Durchfluss durch die Kammern lenkend, vorgesehen ist.

7. Modul nach Anspruch 4, **dadurch gekennzeichnet, dass** in den als Stirn- und Rückenflächen ausgebildeten Seiten des Moduls (4) Durchtrittsöffnungen für einzusetzende Rohrverbindungen (19;19';19") sowie Versorgungs- und Reinigungsöffnungen (18) vorgesehen sind.

8. Modul nach Anspruch 4, **dadurch gekennzeichnet, dass** seine Seitenflächen geschlossen sind.

9. Heizkessel nach den Ansprüchen 1 bis 3, **dadurch gekennzeichnet, dass** die Ausgangsöffnung (14) des eingeordneten Moduls (4) für die abgekühlten Abgase mit einer annähernd horizontal verlaufenden, nach unten gegen den Heizkessel (1) geneigten Rohrsektion (5) verbunden ist, die sich an eine vertikale Rohrsektion (6) angelenkt fortsetzt, in deren Bereich ein Sauggebläse (7) angeordnet ist.

10. Heizkessel nach den Ansprüchen 1 bis 3, **dadurch gekennzeichnet, dass** über die geneigte Rohrsektion (5) das Kondensat in das Modul (4) geleitet ist.

11. Heizkessel nach den Ansprüchen 1 bis 3, **dadurch gekennzeichnet, dass** das Modul (4) in den Heizkessel (1) gleitend bewegbar einzuordnen ist.
